# EUROPÄISCHE PATENTANMELDUNG

(11) **EP 2 317 640 A1**
(43) Veröffentlichungstag der Anmeldung: **04.05.2011**
(21) Anmeldenummer: 10014046.6
(22) Anmeldetag: 28.10.2010
(51) Int. Cl.: H02P 9/04, H02J 3/32

(54) **Stationäre Kraftanlagen**

(30) Priorität: 29.10.2009 AT 17082009
(71) Anmelder: GE Jenbacher GmbH & Co OHG, 6200 Jenbach (AT)
(72) Erfinder: Gomez, Josè, 6020 Innsbruck (AT); Hirzinger, Johann, 6345 Kössen (AT)
(74) Vertreter: Gangl, Markus

(57) **Zusammenfassung**

Verfahren zum Betreiben einer stationären Kraftanlage, wobei eine Brennkraftmaschine (2) einen Wechselstromgenerator (4) antreibt, der mit wenigstens einem Energieverbraucher (6) mit variablem Energiebedarf verbunden ist, wobei die Ausgangsspannung (Uₐ) des Wechselstromgenerators (4) auf eine im Wesentlichen konstante Sollspannung (Uₐ) und die Frequenz (n_{R}) des Wechselstromgenerators (4) auf eine im Wesentlichen konstante Sollfrequenz (nₛ) geregelt werden, wobei bei verringertem Energiebedarf des Verbrauchers (6) und einem damit verbundenen Anstieg der Frequenz (n_{R}) so viel Energie an einen Energiespeicher (10) abgeführt wird, dass die Drehzahl (n_{R}) auf den Sollwert (nₛ) reduziert wird und dass bei einem erhöhten Energiebedarf des Energieverbrauchers (6) und einem damit verbundenen Abfall der Frequenz (n_{R}) vom Energiespeicher (6) soviel elektrische Energie an den Verbraucher (6) bereit gestellt wird, dass die Sollfrequenz (nₛ) erreicht wird.

## Beschreibung

Die Erfindung betrifft ein Verfahren zum Betreiben einer stationären Kraftanlage, wobei eine Brennkraftmaschine einen Wechselstromgenerator antreibt, der mit wenigsten einem Energieverbraucher mit variablem Energiebedarf verbunden ist, wobei die Ausgangsspannung des Wechselstromgenerators auf eine im Wesentlichen konstante Sollspannung und die Frequenz (bzw. Drehzahl) des Wechselstromgenerators auf eine im Wesentlichen konstante Sollfrequenz geregelt werden.

Weiters betrifft die Erfindung eine stationäre Kraftanlage, umfassend eine Brennkraftmaschine, einen von der Brennkraftmaschine betreibbaren Wechselstromgenerator, der im Betriebszustand mit wenigsten einem Energieverbraucher mit variablem Energiebedarf verbunden ist, eine Messeinrichtung zur Erfassung der Frequenz des Wechselstromgenerators, eine Messeinrichtung zur Messung der Ausgangspannung des Wechselstromgenerators und eine Regeleinrichtung, welche die Ausgangsspannung des Wechselstromgenerators auf eine im Wesentlichen konstante Sollspannung und die Frequenz des Wechselstromgenerators auf eine im Wesentlichen konstante Sollfrequenz regelt.

Schließlich betrifft die Erfindung einen Wechselstromgenerator sowie Regeleinrichtungen für eine derartige Anlage sowie zur Durchführung eines solchen Verfahrens.

Stationäre Kraftanlagen werden sowohl im Netzparallelbetrieb als auch im inselbetrieb eingesetzt. Der größte Teil solcher stationärer Kraftanlagen wird derzeit im Netzparallelbetrieb eingesetzt. Für die netzparallele Betriebweise wird die stationäre Kraftanlage an ein Stromnetz (= Verbundnetz) angeschlossen, in das sie Energie speist. Die Drehzahl bzw. Frequenz des Generators wird durch das Verbundnetz vorgegeben, wobei der mit der Brennkraftmaschine verkuppelte Generator synchron mit dem öffentlichen Netz verbunden ist. Bei solchen Anlagen im Netzparallelbetrieb ergeben sich durch Zuschaltung oder Abschaltung einzelner Verbraucher nur minimale Abweichungen von der Nennspannung im Stromnetz, da die Größe des Verbundnetzes kleinere Schwankungen abpuffert.

Anders verhält sich die Situation beim sogenannten inselbetrieb. Dabei wird eine Brennkraftmaschine unabhängig von einem Verbundnetz allein oder in einer kleinen Zusammenschaltung mit anderen lokalen Energieerzeugern betrieben und versorgt lokale Verbraucher mit elektrischer Energie Bei einem solchen Betriebszustand muss die Drehzahl des Wechselstromgenerators bzw. der Brennkraftmaschine konstant gehalten werden, wobei in Abhängigkeit von der abgegebenen elektrischen Leistung am Generator die Leistung der Brennkraftmaschine nachgeführt wird. Aufgrund der lokalen Netzstruktur führen Ab- und Zuschaltungen von elektrischen Verbrauchern zu raschen Rückwirkungen an der stationären Kraftanlage.

Bei höherem Energiebedarf des Verbrauchers (z.B. durch Zuschaltung eines zusätzlichen Verbrauchers) muss zur Konstanthaltung der Drehzahl die Leistung an der Brennkraftmaschine sofort erhöht werden, um für den Verbraucher die geforderte Leistung unter Einhaltung der Sollspannung bereit zu stellen. Aufgrund der Trägheit im System, d.h. aufgrund der Trägheit der Nachregelung der abgegebenen Leistung der Brennkraftmaschine beobachtet man in der Praxis einen kurzen Leistungseinbruch, der innerhalb der Reaktionszeit des Systems durch Nachführen der Brennkraftmaschine bedingt ist. In dieser kurzen Zeitspanne kann es zu Spannungsabfall und Frequenzabweichungen kommen. Umgekehrt führt eine Verringerung des Energiebedarfs des Verbrauchers (z.B. durch Abschaltung eines oder mehrer Verbraucher(s)) zu einer Drehzahlerhöhung des Wechselstromgenerators und unter Umständen zu einer Erhöhung der Ausgangsspannung über den eigentlich konstant zu haltenden Sollwert.

Ein solcher Spannungs- oder Frequenzabfall oder aber auch ein plötzliches Ansteigen der Spannung oder der Frequenz kann zu einer Beeinträchtigung oder Beschädigung des Verbrauchers führen.

Aufgabe der vorliegenden Erfindung ist es, eine stationäre Kraftanlage bereit zu stellen, bei der dieses Problem vermindert ist.

Diese Aufgabe wird bei einem Verfahren zum Betreiben einer stationären Kraftanlage, wobei eine Brennkraftmaschine einen Wechselstromgenerator antreibt, der mit wenigsten einem Energieverbraucher mit variablem Energiebedarf verbunden Ist, wobei die Ausgangsspannung des Wechselstromgenerators auf eine im Wesentlichen konstante Sollspannung und die Frequenz des Wechselstromgenerators auf eine im Wesentlichen konstante Sollfrequenz geregelt werden dadurch gelöst, dass bei verringertem Energiebedarf des Verbrauchers und einem damit verbundenen Anstieg der Frequenz so viel Energie an einen Energiespeicher abgeführt wird, dass die Frequenz auf den Sollwert reduziert wird und dass bei einem erhöhten Energiebedarf des Energieverbrauchers und einem damit verbundenen Abfall der Frequenz vom Energiespeicher soviel elektrische Energie an den Verbraucher bereit gestellt wird, dass die Sollfrequenz erreicht wird.

Bei einer stationären Kraftanlage, umfassend eine Brennkraftmaschine, einen von der Brennkraftmaschine betreibbaren Wechselstromgenerator, der im Betriebszustand mit wenigsten einem Energieverbraucher mit variablem Energiebedarf verbunden ist, eine Messeinrichtung zur Erfassung der Frequenz des Wechselstromgenerators, eine Messeinrichtung zur Messung der Ausgangspannung des Wechselstromgenerators und eine Regeleinrichtung, welche die Ausgangsspannung des Wechselstromgenerators auf eine im Wesentlichen konstante Sollspannung und die Frequenz des Wechselstromgenerators auf eine im Wesentlichen konstante Sollfrequenz regelt, kann diese Aufgabe durch einen Energiespeicher für elektrische Energie, wobei die Regeleinrichtung bei einer Verringerung des Energiebedarfs des wenigstens einen Energieverbrauchers und einem damit verbundenen Anstieg der Frequenz dem Energiespeicher soviel Energie zuführt, dass die Frequenz auf den Sollwert reduziert wird und wobei die Regeleinrichtung bei einer Erhöhung des Energiebedarfs des Energieverbrauchers und einem damit verbundenen Abfalls der Frequenz soviel elektrische Energie vom Energiespeicher an den Verbraucher liefert, dass die Sollfrequenz erreicht wird, gelöst werden.

Obwohl in den oben geschilderten Fällen (Erhöhung oder Verringerung des Energiebedarfts des Verbrauchers) die Abweichungen von den Sollwerten erfasst werden und die Regeleinrichtung die entsprechenden Stellglieder betätigt, damit wieder die Sollwerte erreicht werden, ist bei den bekannten stationären Kraftanlagen im sogenannten Inselbetrieb die Zeit für die Nachführung aufgrund der Trägheit im System zu lange. Die Grundidee der Erfindung besteht darin, einen Energiespeicher zu verwenden, der rasch auf geänderte Zustände reagieren kann. Bei einer zusätzlichen Last am Verbraucher kann so rasch zusätzliche Energie bereitgestellt werden. Bei verringerter Last am Verbraucher wird Energie in den Energiespeicher abgeführt. Weiters kann vorgesehen sein, dass der zusätzliche Energiespeicher eine regelbare Spannungsquelle umfasst. Beispielsweise kann vorgesehen sein, dass die Spannungsquelle einen Akkumulator umfasst. Um die Reaktionszeit im Regelkreis noch mehr zu erhöhen ist es allerdings vorteilhaft, wenn die Spannungsquelle einen Kondensator, vorzugsweise eine Superkapazität, umfasst, da diese Form von Energiespeicher besonders kurze Reaktionszeiten ermöglichen.

Da die gespeicherte elektrische Energie vom Energiespeicher als Gleichspannung abgegeben wird, der Verbraucher in der Regel mit Wechselspannung versorgt werden muss, kann ein DC/AC-Wandler vorgesehen sein. Zur Speicherung von Energie aus dem Wechselstromgenerator in dem Energiespeicher ist dann in einer bevorzugten Variante ein AC/DC-Wandler vorgesehen.

Bei der gegenständlichen Erfindung ist die Brennkraftmaschine bevorzugt als Gasmotor ausgebildet, d.h., es handelt sich um einen Motor der mit gasförmigen Treibstoff betrieben wird. Besonders bevorzugt ist dieser ein fremdgezündeter Gasmotor, d.h., ein Gasmotor in Ottobetriebsweise. Besonders bevorzugt handelt es sich um einen gemischaufgeladenen Gasmotor wie z.B. aus der EP 0 259 382 B1 bekannt. Bei einer Gemischaufladung wird ein gasförmiger Treibstoff gemeinsam mit Verbrennungsluft z.B. in einem Gasmischer vorher vermischt, anschließend in einer Verdichtungseinrichtung verdichtet und schließlich dem Brennraum der Brennkraftmaschine zur Verbrennung zugeführt.

Besonders bevorzugt ist vorgesehen, dass die stationäre Kraftanlage mehrere Brennkraftmaschinen und Wechselstromgeneratoren aber nur eine geringere Anzahl an Energiespeichern, vorzugsweise nur ein Energiespeicher, aufweist. Es werden dadurch die Kosten und die Komplexität für die Anlage verringert.

Zur Leistungsanpassung kann bei einer solchen Brennkraftmaschine der Gemischdruck vor den Einlassventilen der Brennräume bzw. Zylinder in Abhängigkeit von der vom Generator abgegeben elektrischen Leistung bzw. im Inselbetrieb der Frequenz oder Drehzahl der Brennkraftmaschine geregelt werden. Hierbei wird der Sollwert des Gemischdrucks vor den Einlassventilen aus einem Kennlinienfeld, das die Abhängigkeit des Gemischdrucks von der abgegebenen elektrischen Leistung bei konstanten Emissionswerten zeigt, entnommen. Über eine Verstellung des Brennstoff-Luftverhältnisses in einem Gasmischer wird dann der gemessene Ist-Wert des Drucks vor den Einlassventilen auf seinen über das Kennlinienfeld bestimmten Sollwert geregelt. Nach Eintritt der Laständerung wird an der Brennkraftmaschine so schnell wie möglich nachgeregelt. Bei einem Gasmotor gemäß EP 0 259 382 B1 z.B. durch Schließen eines entsprechend groß dimensionierten Umblaseventiles und/oder Öffnen einer Drosselklappe.

In weiteren Aspekten betrifft die Erfindung einen Wechselstromgenerator sowie Regeleinrichtungen für eine solche stationäre Kraftanlage bzw. zur Durchführung eines erfindungsgemäßen Verfahrens. Details zu den Regeleinrichtungen und dem Verfahren ergeben sich zwangsläufig aus den beschriebenen Vorrichtungen.

Weitere Details und Vorteile der Erfindung werden anhand der folgenden Figuren und Figurenbeschreibungen erläutert.

Es zeigt schematisiert die
- Fig. 1: eine erfindungsgemäße stationäre Kraftanlage,
- Fig. 2: eine Detailansicht des elektrischen Energiespeichers und
- Fig. 3: eine Ausführungsvariante der Erfindung.

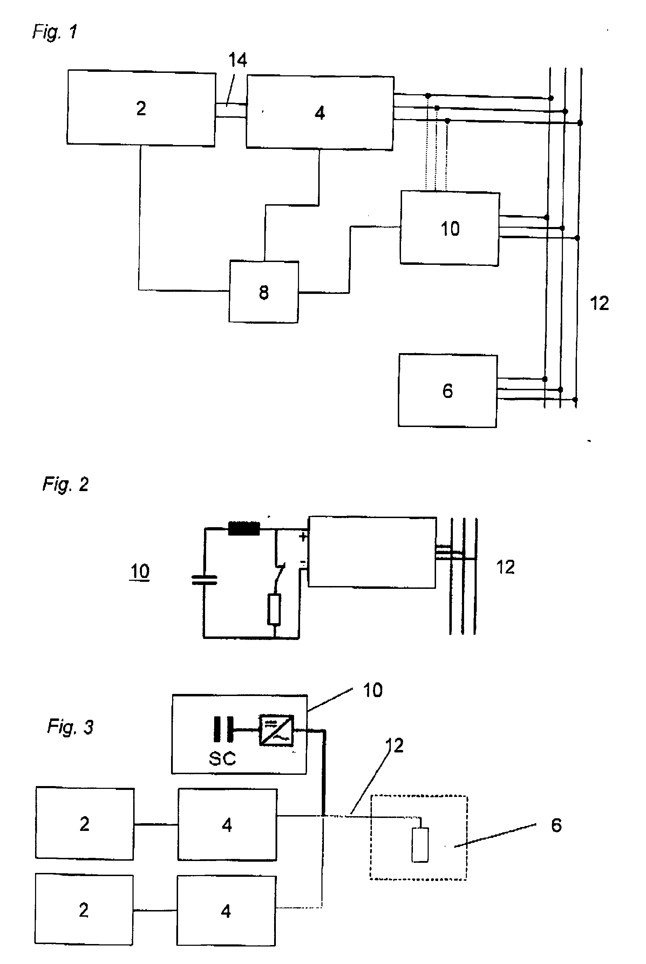

Die Fig. 1 zeigt schematisch eine stationäre Kraftanlage gemäß der Erfindung. Diese umfasst eine Brennkraftmaschine 2 und einen von der Brennkraftmaschine 2 im Betriebszustand betriebenen Wechselstromgenerator 4. Die Brennkraftmaschine 2 ist als Gasmotor in Ottobetriebsweise ausgebildet. Über die Welle 14 treibt die Brennkraftmaschine 2 den Wechselstromgenerator 4 an. Die Welle 14 kann dabei mit oder ohne Übersetzung mit dem Wechselstromgenerator 4 verbunden sein. Der Wechselstromgenerator 4 kann wie an sich bekannt einen Rotor und einen Stator aufweisen. Im Wechselstromgenerator 4 sind Messeinrichtungen (nicht gezeigt) vorgesehen, die die Ausgangsspannung Uₐ und die Drehzahl n_{R} (gleichbedeutend der Frequenz) des Rotors des Wechselstromgenerators 4 erfassen. Weiters ist der Wechselstromgenerator 4 mit einem schematisch dargestellten Energieverbraucher 6 verbunden. Dabei ist ein Netz 12 vorgesehen, das die Kraftanlage mit dem oft weiter entfernt liegenden Verbraucher 6 verbindet. Da das Netz 12 eigentlich nur durch die beschriebene Kraftanlage und allenfalls einzelne weitere kleinere Kraftanlagen mit Strom gespeist wird, spricht man von einem Inselbetrieb.

Weiters ist eine Regeleinrichtung 8 erkennbar, die mit der Brennkraftmaschine 2, dem Wechselstromgenerator 4 und dem Energiespeicher 10 für elektrische Energie verbunden ist. Die Regeleinrichtung 8 bezieht die Informationen über die Ausgangspannung Uₐ des Wechselstromgenerators 4 und die Drehzahl n_{R} des Rotors des Wechselstromgenerators 4 und regelt die Ausgangsspannung Uₐ des Wechselstromgenerators auf eine im Wesentlichen konstante Sollspannung Uₛ und die Drehzahl n_{R} des Wechselstromgenerators 4 auf eine im Wesentlichen konstante Solldrehzahl nₛ. Im Betriebszustand treibt dabei die Brennkraftmaschine 2 den Wechselstromgenerator 4 an und die Regeleinrichtung 8 greift in die Treibstoffzufuhr der Brennkraftmaschine ein, um die Drehzahl und die Ausgangsspannung auf den Sollwerten zu halten,

Der Energiespeicher 10 für elektrische Energie, der im Rahmen der Beschreibung zu Fig. 2 näher erläutert werden wird, ist ebenfalls mit der Regeleinrichtung 8 verbunden. Der Energiespeicher 10 für elektrische Energie ist außerdem mit dem Netz 12 verbunden (eine Verbindung mit dem Generator 4 wäre aber auch denkbar und diese ist daher strichliert angedeutet).

Aufgrund der lokalen Struktur des Netzes 12 führt z.B. eine Laständerung am Energieverbraucher 6 zu einer sofortigen Rückwirkung an das Netz 12 und in weiterer Folge an den Wechselstromgenerator 4. Es können zwei Situationen unterschieden werden.
(a) Wird der Energiebedarf des Energieverbrauchers 6 plötzlich verringert, wird weniger Energie benötigt als von der Kraftanlage produziert wird. In weiterer Folge steigt die Drehzahl n_{R} des Wechselstromgenerators 4 an und überschreitet somit den Sollwert n_{S}. Auch die Ausgangsspannung Uₐ steigt unter Umständen an und überschreitet den Sollwert Uₛ. Die Regeleinrichtung 8 reduziert in weiterer Folge die Treibstoffzufuhr an der Brennkraftmaschine 2, sodass es zur Verringerung der Motordrehzahl und in weiterer Folge zur Verringerung der Drehzahl n_{R} am Wechselstromgenerator 4 kommt. Die damit verbundene Leistungssenkung an der Brennkraftmaschine 2 führt zur Reduktion der der Drehzahl n_{R} (und in weiterer Folge unter Umständen zur Reduktion der Ausgangsspannung Uₐ). Dieser Eingriff ist allerdings mit einer gewissen Trägheit verbunden, sodass die Regulierung auf die Sollwerte einige Zeit in Anspruch nimmt, in der es zu einer Schädigung des Verbrauchers 6 kommen könnte. Im Rahmen der Erfindung ist daher vorgesehen, dass der Energiespeicher 10 für elektrische Energie, aufgrund der Verringerung des Energiebedarfs des Energieverbrauchers 6 so zugeschaltet wird, dass die überschüssige Energie abgebaut und dem Energiespeicher 6 zugeführt wird. Die Regeleinrichtung 10 gewährleistet, dass in erster Linie die Drehzahl n_{R} genau auf den Sollwert n_{S} geregelt wird. In weiterer Folge stellt sich die Ausgangsspannung Uₐ genau auf den Sollwert U_{S} ein.
(b) Wird der Energiebedarf des Energieverbrauchers 6 plötzlich erhöht, wird plötzlich mehr Energie benötigt als von der Kraftanlage produziert wird. In weiterer Folge sinkt die Drehzahl n_{R} ab und unterschreitet den Sollwert n_{S}. Auch die Ausgangsspannung Uₐ fällt unter den Sollwert Uₛ ab. Die Regeleinrichtung 8 erhöht in weiterer Folge die Treibstoffzufuhr an der Brennkraftmaschine 2, sodass es durch die damit verbundene Leistungsteigerung zu einer Erhöhung der Motordrehzahl und in weiterer Folge zur Erhöhung der Drehzahl n_{R} am Wechselstromgenerator 4 kommt. Die sich einstellende Drehzahlanhebung an der Brennkraftmaschine 2 führt zur Erhöhung der Ausgangsspannung Uₐ. Auch dieser Eingriff ist mit einer gewissen Trägheit verbunden, sodass die Regulierung auf die Sollwerte einige Zeit in Anspruch nimmt, in der es zu einem Leistungseinbruch und im schlimmsten Fall zu einer Schädigung des Verbrauchers 6 kommen könnte. Im Rahmen der Erfindung ist daher vorgesehen, dass der Energiespeicher 10 für elektrische Energie, aufgrund der Erhöhung des Energiebedarfs des Energieverbrauchers 6 so zugeschaltet wird, dass die benötigte Drehzahl und in weiterer Folge der Spannung aus dem Energiespeicher 6 an das Netz geliefert wird. Die Regeleinrichtung 10 gewährleistet, dass die Motordrehzahl genau auf den Sollwert nₛ und die Ausgangsspannung genau auf den Sollwert U_{S} erhöht wird.

Fig. 2 zeigt abstrakt den Energiespeicher 10 für elektrische Energie. Der eigentliche Energiespeicher 10 könnte wie hier Kondensatoren 18 und/oder DC-Superkondensatoren sowie Sicherheitskomponenten umfassen. Weiters ist ein Spannungswandler 16 vorgesehen, und zwar ein DC/DC und einen DC/AC-Wandler 16, damit die in den Kondensatoren gespeicherte Energie als Wechselspannung abgegeben werden kann. Umgekehrt muss natürlich auch die in den Kondensatoren zu speichernde Wechselspannung aus der Kraftanlage zunächst in Gleichspannung umgewandelt werden. Weitere Bestandteile wären z.B. ein Leistungswandler mit Steuerung, Schütze etc.

Fig. 3 zeigt eine Ausführungsvariante der stationären Kraftanlage mit zwei Brennkraftmaschinen 2 und Wechselstromgeneratoren 4 aber nur einem Energiespeicher 10 für die elektrische Energie, sowie einem Verbraucher 6.

## Patentansprüche

1. Verfahren zum Betreiben einer stationären Kraftanlage, wobei eine Brennkraftmaschine (2) einen Wechselstromgenerator (4) antreibt, der mit wenigstens einem Energieverbraucher (6) mit variablem Energiebedarf verbunden ist, wobei die Ausgangsspannung (Uₐ) des Wechselstromgenerators (4) auf eine im Wesentlichen konstante Sollspannung (Uₛ) und die Frequenz (n_{R}) des Wechselstromgenerators (4) auf eine im Wesentlichen konstante Sollfrequenz (n_{S}) geregelt werden, **dadurch gekennzeichnet, dass** bei verringertem Energiebedarf des Verbrauchers (6) und einem damit verbundenen Anstieg der Frequenz (n_{R}) so viel Energie an einen Energiespeicher (10) abgeführt wird, dass die Drehzahl (n_{R}) auf den Sollwert (n_{S}) reduziert wird und dass bei einem erhöhten Energiebedarf des Energieverbrauchers (6) und einem damit verbundenen Abfall der Frequenz (n_{R}) vom Energiespeicher (6) soviel elektrische Energie an den Verbraucher (6) bereit gestellt wird, dass die Sollfrequenz (n_{S}) erreicht wird.

2. Verfahren nach Anspruch 1, **dadurch gekennzeichnet**, außerdem die Ausgangsspannung (Uₐ) des Wechselstromgenerators (4) auf jene Sollspannung (U_{S}), die dem tatsächlichen momentanen Energieverbrauch des Energieverbrauchers (6) entspricht, nachgeregelt wird, indem in Abhängigkeit vom momentanen Energiebedarf des Verbrauchers (6) die an den Energiespeicher abgeführte oder vom Energiespeicher bereitgestellte Energiemenge stetig verringert wird.

3. Verfahren nach Anspruch 1 oder Anspruch 2, **dadurch gekennzeichnet, dass** zur Nachregelung der Drehzahl (n_{R}) des Wechselstromgenerators (4) auf den Sollwert (n_{S}) durch Anpassung der der Brennkraftmaschine (2) zugeführten Treibstoffmenge erfolgt.

4. Stationäre Kraftanlage, umfassend
a. eine Brennkraftmaschine (2),
b. einen von der Brennkraftmaschine (2) betreibbaren Wechselstromgenerator (4), der im Betriebszustand mit wenigsten einem Energieverbraucher (6) mit variablem Energiebedarf verbunden ist,
c. eine Messeinrichtung zur Erfassung der Frequenz (n_{R}) des Wechselstromgenerators (4),
d. eine Messeinrichtung zur Messung der Ausgangspannung (Uₐ) des Wechselstromgenerators (4).
e. eine Regeleinrichtung (8), welche die Ausgangsspannung (Uₐ) des Wechselstromgenerators (4) auf eine im Wesentlichen konstante Sollspannung (Uₛ) und die Frequenz (n_{R}) des Wechselstromgenerators (4) auf eine im Wesentlichen konstante Sollfrequenz (n_{S}) regelt,
**gekennzeichnet durch** einen Energiespeicher (10) für elektrische Energie, wobei die Regeleinrichtung (8) bei einer Verringerung des Energiebedarfs des wenigstens einen Energieverbrauchers (6) und einem damit verbundenen Anstieg der Frequenz (n_{R}) dem Energiespeicher (10) soviel Energie zuführt, dass die Frequenz auf den Sollwert (nₛ) reduziert wird und wobei die Regeleinrichtung (8) bei einer Erhöhung des Energiebedarfs des Energieverbrauchers (6) und einem damit verbundenen Abfall der Frequenz (n_{R}) soviel elektrische Energie vom Energiespeicher (10) an den Verbraucher (6) liefert, dass die Sollfrequenz (nₛ) erreicht wird.

5. Stationäre Kraftanlage nach Anspruch 4 **dadurch gekennzeichnet, dass** die Regeleinrichtung (8) außerdem die Drehzahl (n_{R}) des Wechselstromgenerators (4) auf die Solldrehzahl (n_{S}), die sich durch Energiebilanz aus dem Energieverbrauch des Energieverbrauchers (6) und der durch den Wechselstromgenerator (4) bereitgestellten Energie ergibt, nachregelt, wobei außerdem die Drehzahl (n_{R}) des Wechselstromgenerators (4) auf die Solldrehzahl (n_{S}), die dem Energieverbrauch des Energieverbrauchers (6) entspricht, nachgeregelt wird, wobei die Nachregelung der Drehzahl (n_{R}) des Wechselstromgenerators (4) auf die Solldrehzahl (n_{S}) langsamer erfolgt als das Abführen oder Bereitstellen der Energie an oder vom Energiespeicher (6), wobei bei verringertem Energiebedarf des Verbrauchers (6) und dem Abführen der Energie an den Energiespeicher (10) die Drehzahl (n_{R}) des Wechselstromgenerators (4) reduziert wird und dass bei einem erhöhten Energiebedarf des Energieverbrauchers (6) und dem Bereitstellen von Energie an den Verbraucher (6) die Drehzahl (n_{R}) des Wechselstromgenerators (4) erhöht wird, solange bis ein Abführen oder Bereitstellen an Energie an oder vom Energiespeicher (6) nicht mehr erforderlich ist.

6. Stationäre Kraftanlage nach Anspruch 4 oder Anspruch 5, **dadurch gekennzeichnet, dass** die Spannungsquelle (10) einen Kondensator, vorzugsweise eine Superkapazität, umfasst.

7. Stationäre Kraftanlage nach einem der Ansprüche 4 bis 6, **dadurch gekennzeichnet, dass** die Brennkraftmaschine (2) als Gasmotor, vorzugsweise mehrzylindrige Gas-Otto-Motor ausgebildet ist.

8. Stationäre Kraftanlage nach Anspruch 7, **dadurch gekennzeichnet, dass** der Gasmotor zumindest eine Verdichtungseinrichtung aufweist.

9. Stationäre Kraftanlage nach Anspruch 8, **dadurch gekennzeichnet, dass** der der Verdichtungseinrichtung ein Gasmischer vorgelagert ist, in dem Treibstoff und Luft mischbar sind.

10. Stationäre Kraftanlage nach Anspruch 8 oder Anspruch 9, **dadurch gekennzeichnet, dass** der Verdichtungseinrichtung ein Gasmischer vorgelagert ist, in dem Treibstoff und Luft mischbar sind.

11. Stationäre Kraftanlage nach einem der Ansprüche 5 bis 10, **dadurch gekennzeichnet, dass** die Nachregelung der Drehzahl (n_{R}) des Wechselstromgenerators (4) auf die Solldrehzahl (n_{S}), die dem Energieverbrauch des Energieverbrauchers (6) entspricht, über die Treibstoffzufuhr der Brennkraftmaschine (2) erfolgt.

12. Stationäre Kraftanlage nach einem der Ansprüche 2 bis 7, **dadurch gekennzeichnet, dass** mehrere Brennkraftmaschinen (2) und Wechselstromgeneratoren (4), aber eine geringere Anzahl an Energiespeichern (10), vorzugsweise nur ein Energiespeicher (10), vorgesehen sind.

13. Wechselstromgenerator (4), der von einer Kraftmaschine (2) betreibbar ist und im Betriebszustand mit wenigstens einem Energieverbraucher (6) mit variablem Energiebedarf verbunden ist, umfassend
a. eine Messeinrichtung zur Erfassung der Drehzahl (n_{R}) des Wechselstromgenerators (4),
b. eine Messeinrichtung zur Messung der Ausgangspannung (Uₛ) des Wechselstromgenerators (4),
c. eine Regeleinrichtung (8), welche die Ausgangsspannung (Uₛ) des Wechselstromgenerators (4) auf eine im Wesentlichen konstante Sollspannung (Uₛ) und die Drehzahl (n_{R}) des Wechselstromgenerators (4) auf eine im Wesentlichen konstante Solldrehzahl (n_{S}) regelt,
**gekennzeichnet durch** einen Energiespeicher (10) für elektrische Energie, wobei die Regeleinrichtung (8) bei einer Verringerung des Energiebedarfs des wenigstens einen Energieverbrauchers (6) und einem damit verbundenen Anstieg der Frequenz (n_{R}) dem Energiespeicher (10) soviel Energie zuführt, dass die Frequenz auf den Sollwert (nₛ) reduziert wird und wobei die Regeleinrichtung (8) bei einer Erhöhung des Energiebedarfs des Energieverbrauchers (6) und einem damit verbundenen Abfall der Frequenz (n_{R}) soviel elektrische Energie vom Energiespeicher (10) an den Verbraucher (6) liefert, dass die Sollfrequenz (n_{S}) erreicht wird

14. Wechselstromgenerator nach Anspruch 13, **dadurch gekennzeichnet, dass** die Regeleinrichtung (8) außerdem die Drehzahl (n_{R}) des Wechselstromgenerators (4) auf die Solldrehzahl (n_{S}), die sich durch Energiebilanz aus dem Energieverbrauch des Energieverbrauchers (6) und der durch den Wechselstromgenerator (4) bereitgestellten Energie ergibt, nachregelt, wobei außerdem die Drehzahl (n_{R}) des Wechselstromgenerators (4) auf die Solldrehzahl (n_{S}), die dem Energieverbrauch des Energieverbrauchers (6) entspricht, nachgeregelt wird, wobei die Nachregelung der Drehzahl (n_{R}) des Wechselstromgenerators (4) auf die Solldrehzahl (n_{S}) langsamer erfolgt als das Abführen oder Bereitstellen der Energie an oder vom Energiespeicher (6), wobei bei verringertem Energiebedarf des Verbrauchers (6) und dem Abführen der Energie an den Energiespeicher (10) die Drehzahl (n_{R}) des Wechselstromgenerators (4) reduziert wird und dass bei einem erhöhten Energiebedarf des Energieverbrauchers (6) und dem Bereitstellen von Energie an den Verbraucher (6) die Drehzahl (n_{R}) des Wechselstromgenerators (4) erhöht wird, solange bis ein Abführen oder Bereitstellen an Energie an oder vom Energiespeicher (6) nicht mehr erforderlich ist.

15. Regeleinrichtung für eine stationäre Kraftanlage nach einem der Ansprüche 4 bis 12 oder einen Wechselstromgenerator nach Anspruch 13 oder Anspruch 14 oder zur Durchführung eines Verfahrens nach einem der Ansprüche 1 bis 3.
